# EUROPEAN PATENT APPLICATION

(11) **EP 2 633 949 A1**
(43) Date of publication of application: **04.09.2013**
(21) Application number: 11836340.7
(22) Date of filing: 26.10.2011
(51) Int. Cl.: B23Q 17/09, B23Q 15/013, B23Q 17/00, G05B 19/404

(54) **METHOD FOR MAINTAINING CUTTING QUALITY, AND DEVICE FOR MAINTAINING CUTTING QUALITY**

(30) Priority: 27.10.2010 JP 2010240850
(71) Applicant: Mitsubishi Heavy Industries, Ltd., Tokyo 108-8215 (JP)
(72) Inventor: MICHISHITA, Yukio, Tokyo 108-8215 (JP); MATSUBARA, Nariyasu, Tokyo 108-8215 (JP)
(74) Representative: Intès, Didier Gérard André
(86) International application number: PCT/JP2011/074677
(87) International publication number: WO 2012/057207

(57) **Abstract**

Provided is a method for maintaining cutting quality in which a work surface can be reliably maintained at a predetermined hardness or less regardless of a disturbance during cutting. The method includes a data-acquiring step of acquiring, as a target cutting resistance, the cutting resistance of a machining tool (7) during cutting performed such that the hardness of a surface layer is lower than a predetermined hardness by adjusting machining conditions; and a cutting step of performing cutting while detecting the cutting resistance of the machining tool (7) during cutting and performing control such that the detected cutting resistance is lower than the target cutting resistance.

## Description

### Technical Field

The present invention relates to methods and apparatuses for maintaining cutting quality.

### Background Art

In nuclear power plants, austenitic stainless steel is typically used as a material for equipment, piping, etc. Austenitic stainless steel is known to develop a surface hardened layer when subjected to common cold machining such as cutting or grinding (see, for example, PTLs 1 and 2).
For recirculation piping in boiling-water nuclear power plants, for example, it is generally considered that a hardened layer having a Vickers hardness of 300 HV or more could result in stress corrosion cracking (SCC), and this is also believed to be true for equipment and piping through which water circulates in pressurized-water nuclear power plants.

To inhibit SCC, some measures have been taken for piping in the related art, including removing a surface hardened layer formed during cutting by buffing the work surface after cutting, and inhibiting SCC by applying a compressive stress to the work surface.
These measures require post-treatment such as removing the hardened layer and/or applying a compressive stress after cutting, which results in extended working time and increased costs.
One attempt to solve this is to perform machining only by cutting so as not to cause any surface hardened layer by adjusting the machining conditions, including tool conditions such as the shape of the tool and cutting conditions such as the cutting depth, feed rate, and cutting speed of the tool.

### {Citation List}

### Patent Literature

{PTL 1}
   Japanese Unexamined Patent Application, Publication No. 2005-257589
{PTL 2}
   Japanese Unexamined Patent Application, Publication No. 2008-96174

### Summary of Invention

### Technical Problem

The machining conditions, including tool conditions such as the shape of the tool and cutting conditions such as the cutting depth, feed rate, and cutting speed of the tool, are used as preset values, the machining conditions may vary with variations in the cutting state due to disturbances during cutting. Such variations in machining conditions might, in some cases, prevent machining within a predetermined hardness.

In view of the foregoing, it is an object of the present invention to provide a method and apparatus for maintaining cutting quality, in which a work surface can be reliably maintained at a predetermined hardness or less regardless of a disturbance during cutting.

### Solution to Problem

To solve the above problem, the present invention employs the following solutions.
Specifically, a first aspect of the present invention is a method for maintaining cutting quality, including a data-acquiring step of acquiring, as a target cutting resistance in advance, the cutting resistance of a tool during cutting performed such that the hardness of a surface layer is lower than a predetermined hardness by adjusting machining conditions; and a cutting step of performing cutting while detecting the cutting resistance of the tool during cutting and performing control such that the detected cutting resistance is lower than the target cutting resistance.

For cutting, it is known that a cutting resistance exerted on a workpiece by a tool plastically strains the surface of the workpiece, thus hardening the cut surface layer, and that a lower cutting resistance results in a smaller amount of plastic strain in the workpiece and therefore a lower surface hardness. The surface layer of the workpiece can be maintained at a predetermined hardness or less, for example, to a hardness that allows stress corrosion cracking to be inhibited or less, during cutting by setting the machining conditions, including tool conditions such as the shape of the tool and cutting conditions such as the cutting depth, feed rate, and cutting speed of the tool, so that the cutting resistance is low, and cutting the workpiece under the set machining conditions.
In the method for maintaining cutting quality according to this aspect, the data-acquiring step involves acquiring the cutting resistance of a tool during cutting performed such that the hardness of a surface layer is lower than a predetermined hardness by adjusting machining conditions, and setting the acquired cutting resistance as a target cutting resistance. Since a lower cutting resistance results in a lower surface hardness, as discussed above, controlling the cutting resistance of the tool to the target cutting resistance or less allows the surface layer of the machined workpiece to have a hardness lower than the predetermined hardness.

Next, the cutting step, in which cutting is actually performed, involves performing cutting while detecting the cutting resistance of the tool during cutting and performing control such that the detected cutting resistance is lower than the target cutting resistance.
When the machining conditions for cutting vary due to a certain disturbance, the cutting resistance varies accordingly; therefore, the disturbance state can be determined by detecting the cutting resistance. The cutting step, which involves performing control such that the cutting resistance is lower than the target cutting resistance, can prevent the cutting resistance from exceeding the target cutting resistance regardless of a disturbance. This allows the surface layer of the cut workpiece to be reliably maintained at a hardness lower than the predetermined hardness.
As used herein, the term "control" encompasses changing the machining conditions, for example, cutting conditions such as cutting depth, feed rate, and cutting speed, or notifying the operator if the cutting state is determined to be defective to allow him or her to manually change the machining conditions etc. (e.g., replace the tool).

In the above aspect, a thrust force is preferably used as the cutting resistance.

The thrust force, which is a force acting in the direction in which the tool is pressed against the workpiece, directly affects the amount of plastic strain in the work surface of the workpiece. Thus, by controlling the thrust force, the surface layer of the workpiece can be more reliably maintained at a hardness lower than the predetermined hardness.

In the above aspect, a principal force may be used as the cutting resistance.

The principal force, which is a force acting in the direction in which the tool cuts the workpiece, may be controlled because the principal force is known to have a certain relationship with the thrust force.
In this case, because the principal force is larger than the thrust force, the detection accuracy can be improved as compared with using the thrust force, which is small, i.e., 50 N or less.
Both the principal force and the thrust force are preferably controlled to utilize the respective advantages thereof.

A second aspect of the present invention is a method for maintaining cutting quality, including a data-acquiring means for acquiring unit that acquires, as a target cutting resistance in advance, the cutting resistance of a tool during cutting performed such that the hardness of a surface layer is lower than a predetermined hardness by adjusting machining conditions; a detecting means for detecting the cutting resistance of the tool during cutting; and a control means for performing control such that the cutting resistance detected by the detecting means is lower than the target cutting resistance.

For cutting, it is known that a cutting resistance exerted on a workpiece by a tool plastically strains the surface of the workpiece, thus hardening the cut surface layer, and that a lower cutting resistance results in a smaller amount of plastic strain in the workpiece and therefore a lower surface hardness. The surface layer of the workpiece can be maintained at a predetermined hardness or less, for example, to a hardness that allows stress corrosion cracking to be inhibited or less, during cutting by setting the machining conditions, including tool conditions such as the shape of the tool and cutting conditions such as the cutting depth, feed rate, and cutting speed of the tool, so that the cutting resistance is low, and cutting the workpiece under the set machining conditions.
In the apparatus for maintaining cutting quality according to this aspect, the data-acquiring means acquires the cutting resistance of a tool during cutting performed such that the hardness of a surface layer is lower than a predetermined hardness by adjusting machining conditions, and sets the acquired cutting resistance as a target cutting resistance. Because a lower cutting resistance results in a lower surface hardness, as discussed above, controlling the cutting resistance of the tool to the target cutting resistance or less allows the surface layer of the machined workpiece to have a hardness lower than the predetermined hardness.

Next, the detecting means detects the cutting resistance of the tool during cutting, and the control means performs control such that the detected cutting resistance is lower than the target cutting resistance.
When the machining conditions for cutting vary due to a certain disturbance, the cutting resistance varies accordingly; therefore, the disturbance state can be determined by detecting the cutting resistance. The cutting step, which involves performing control such that the cutting resistance is lower than the target cutting resistance, can prevent the cutting resistance from exceeding the target cutting resistance regardless of a disturbance. This allows the surface layer of the cut workpiece to be reliably maintained at a hardness lower than the predetermined hardness.
As used herein, the term "control" encompasses changing the machining conditions, for example, cutting conditions such as cutting depth, feed rate, and cutting speed, or notifying the operator if the cutting state is determined to be defective to allow him or her to manually change the machining conditions etc. (e.g., replace the tool).

In the above aspect, a thrust force is preferably used as the cutting resistance.

The thrust force, which is a force acting in the direction in which the tool is pressed against the workpiece, directly affects the amount of plastic strain in the work surface of the workpiece. Thus, by controlling the thrust force, the surface layer of the workpiece can be more reliably maintained at a hardness lower than the predetermined hardness.

In the above aspect, a principal force may be used as the cutting resistance.

The principal force, which is a force acting in the direction in which the tool cuts the workpiece, may be controlled because the principal force is known to have a certain relationship with the thrust force.
In this case, because the principal force is larger than the thrust force, the detection accuracy can be improved as compared with using the thrust force, which is small, i.e., 50 N or less.
Both the principal force and the thrust force are preferably controlled to utilize the respective advantages thereof.

### Advantageous Effects of Invention

The present invention acquires, in advance, the cutting resistance of a tool during cutting performed such that the hardness of a surface layer is lower than a predetermined hardness by adjusting machining conditions, sets the acquired cutting resistance as a target cutting resistance, and performs cutting while detecting the cutting resistance of the tool during cutting and performing control such that the detected cutting resistance is lower than the target cutting resistance; therefore, the surface layer of the cut workpiece can be reliably maintained at a hardness lower than the predetermined hardness regardless of a disturbance. Brief Description of Drawings

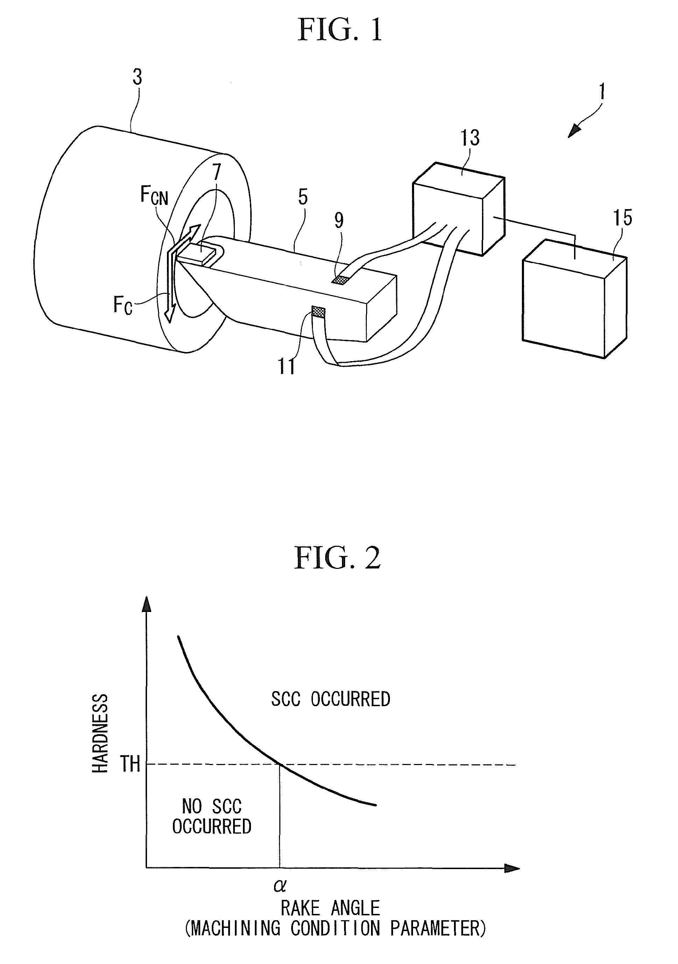

{Fig. 1}
   Fig. 1 is a block diagram illustrating, in outline, the structure of a cutting-quality maintaining apparatus for practicing a method for maintaining cutting quality according to an embodiment of the present invention.
{Fig. 2}
   Fig. 2 is a graph showing the relationship between rake angle, which is one of the machining conditions, and the hardness of a machined surface layer.
{Fig. 3}
   Fig. 3 is a graph showing the relationship between the rake angle of a machining tool and thrust force.
{Fig. 4}
   Fig. 4 is a graph showing the relationship between the thrust force and the hardness of the machined surface layer.
{Fig. 5}
   Fig. 5 is a graph showing the relationship between the thrust force and principal force and the hardness of the surface layer.

### Description of Embodiments

A method for maintaining cutting quality according to an embodiment of the present invention will hereinafter be described with reference to Figs. 1 to 5.
Fig. 1 is a block diagram illustrating, in outline, the structure of a cutting-quality maintaining apparatus 1 for practicing the method for maintaining cutting quality according to the embodiment of the present invention.

A cutting system performs cutting by rotating a workpiece 3 about the axis thereof while feeding a machining tool (tool) 7 secured to the end of a tool holder 5 in the axial direction of the workpiece 3. The tool holder 5 has a substantially rectangular shape and is disposed so as to extend in a substantially horizontal direction, with the base thereof securely attached to a mount (not shown). The machining tool 7 is securely attached to the end of the top surface of the tool holder 5.

During cutting, the machining tool 7 exerts a cutting force on the workpiece 3, and as its reaction, the workpiece 3 exerts a cutting resistance on the machining tool. The cutting resistance is composed of a thrust force Fcn, which is a force acting in the direction in which the machining tool 7 is pressed against the workpiece 3, a principal force Fc, which is a force acting in the direction in which the machining tool 7 cuts the workpiece 3, and a feed force Fp, which is a force acting in the direction in which the machining tool 7 is fed, i.e., the axial direction.
The tool holder 5 is bent under the thrust force Fcn and principal force Fc acting on the machining tool 7. The principal force Fc is considerably larger than the thrust force Fcn and the feed force Fp.

The cutting-quality maintaining apparatus 1 includes two strain gauges 9 and 11 bonded to the top and side surfaces, respectively, of the tool holder 5, a signal converter 13 that amplifies and outputs measurement signals from the strain gauges 9 and 11, and a controller 15 that performs quality determination upon receipt of the signals output from the signal converter 13 and that issues a notification of any defective state.
The bonded strain gauges 9 and 11 are calibrated in advance with acquired data about the relationship between the principal force Fc and thrust force Fcn and the amount of strain.

The notification from the controller 15 is given by generating an alarm and displaying the defective state. With this notification, the operator will find that the cutting state is defective and take a measure such as changing the machining conditions or replacing the tool.
Along with the notification, the controller 15 may send a control signal to a control unit (not shown) of the cutting system to change the machining conditions, for example, the cutting conditions such as cutting depth, feed rate, and cutting speed.

The quality determination performed by the controller 15 will be described next.
The workpiece 3 is, for example, a common pipe formed of austenitic stainless steel such as SUS316 or SUS304 in a boiling-water nuclear power plant. The inner surface of an end of the common pipe is subjected to thinning (cutting).
For a common pipe formed of austenitic stainless steel, it is generally considered that a hardened layer having a Vickers hardness of 300 HV or more could result in stress corrosion cracking (SCC), and machining within that hardness is required.

During cutting, the surface layer of the workpiece 3 can be maintained at a predetermined hardness or less, for example, to a hardness TH that allows stress corrosion cracking (SCC) to be inhibited or less, by setting the machining conditions, including tool conditions such as the shape of the machining tool 7 and cutting conditions such as the cutting depth, feed rate, and cutting speed of the tool, so that the cutting resistance is low, and cutting the workpiece 3 under the set machining conditions.

Fig. 2 is a graph showing the relationship between rake angle, which is one of the machining conditions, and the hardness of the machined surface layer, where the graph is obtained by performing cutting using the cutting system shown in Fig. 1 with varying rake angles of the machining tool 7 and measuring and plotting the hardness of the surface layer during the cutting.
A larger rake angle results in a smaller chip thickness and a larger chip shear angle, and therefore a smaller cutting force (cutting resistance) required for cutting. This reduces the cutting resistance exerted on the workpiece 3, thus inhibiting hardening of the cut surface. As shown in Fig. 2, a rake angle of α or more allows machining such that the hardness of the surface layer is lower than the hardness TH.

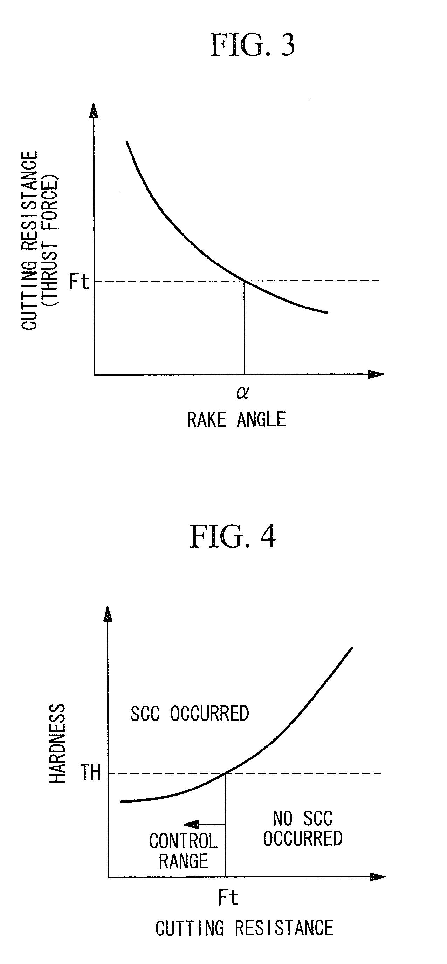

Fig. 3 is a graph showing the relationship between the rake angle of the machining tool 7 and the thrust force Fcn, where the graph is obtained by performing cutting using the cutting system shown in Fig. 1 with varying rake angles of the machining tool 7 and measuring and plotting the thrust force Fcn during the cutting.
As discussed above, a larger rake angle results in a lower cutting resistance. The magnitude Ft of the thrust force Fcn at a rake angle of α is then determined. Thus, a thrust force Fcn smaller than the magnitude Ft allows the hardness of the cut surface to be lower than the hardness TH.
This is also true for the principal force.

Fig. 4 is a graph showing the relationship between the thrust force and the hardness of the machined surface layer, where the graph is obtained by combining the relationship between the rake angle and the hardness of the machined surface layer in Fig. 2 with the relationship between the rake angle and the thrust force in Fig. 3.
This shows that if cutting is performed such that the thrust force Fcn of the cutting resistance is lower than the magnitude Ft, the hardness of the cut surface is lower than the hardness TH, which allows corrosion cracking to be inhibited.
The controller 15 sets and stores the magnitude Ft as the target cutting resistance. The foregoing is a data-acquiring step in the present invention.

The workpiece 3 is then actually cut into a final product using the cutting system shown in Fig. 1 (cutting step).
While the workpiece 3 is rotated about the axis thereof, the machining tool 7 secured to the end of the tool holder 5 is fed in the axial direction of the workpiece 3 to perform cutting.
The machining tool 7 then exerts a cutting force on the workpiece 3, and as its reaction, the workpiece 3 exerts a cutting resistance on the machining tool, thus bending the tool holder 5.

The bending of the tool holder 5 is detected by the strain gauges 9 and 11, which send measurement signals. The measurement signals are amplified by the signal converter 13 and are fed to the controller 15.
When the machining conditions for cutting vary due to a certain disturbance, the cutting resistance varies accordingly. For example, the cutting resistance increases as the machining tool 7 wears.
The controller 15 calculates the cutting resistance corresponding to the measurement signals and compares it with the target cutting resistance. If the cutting resistance corresponding to the measurement signals is lower than the target cutting resistance, the controller 15 determines that the cutting state is good. Conversely, if the cutting resistance corresponding to the measurement signals is higher than the target cutting resistance, the controller 15 determines that the cutting state is defective and notifies the operator by sounding an alarm. At the same time, the controller 15 displays the defective cutting state on a display unit.

In response to this notification, the operator will take a measure such as changing the machining conditions or replacing the tool, depending on the state.
Thus, the controller 15 can determine the disturbance state by detecting the cutting resistance and can maintain the cutting resistance below the target cutting resistance, thus preventing the cutting resistance from exceeding the target cutting resistance regardless of a disturbance.
This allows the surface layer of the cut workpiece to be reliably maintained at a hardness lower than the predetermined hardness.

The thrust force Fcn is preferably used as the cutting resistance controlled by the controller 15.
The thrust force Fcn, which is a force acting in the direction in which the machining tool 7 is pressed against the workpiece 3, directly affects the amount of plastic strain in the work surface of the workpiece 3. Thus, by controlling the thrust force Fcn, the surface layer of the workpiece 3 can be more reliably maintained at a hardness lower than the predetermined hardness

The principal force Fc may also be used as the cutting resistance controlled by the controller 15.

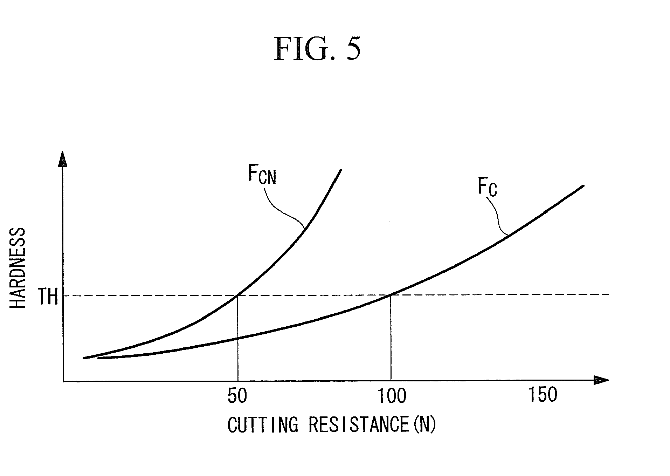

Fig. 5 is a graph showing the relationship between the thrust force Fcn and principal force Fc and the hardness of the surface layer, where the graph is obtained in the same manner as Fig. 4.
The principal force Fc, which is a force acting in the direction in which the machining tool 7 cuts the workpiece 3, may be controlled so long as the principal force Fc has a certain relationship with the thrust force Fcn, as shown in Fig. 5.
Because the principal force Fc is larger than the thrust force Fcn, the magnitude of the target principal force Fc is larger than that of the target thrust force Fcn. For example, as shown in Fig. 5, the magnitude of the target principal force Fc is 100 N. This is twice the magnitude of the target thrust force Fcn, i.e., 50 N, thus improving the detection accuracy of the cutting resistance.

Both the principal force Fc and the thrust force Fcn may be controlled to utilize the respective advantages thereof.

The present invention is not limited to the embodiments discussed above; various modifications are possible without departing from the spirit of the present invention. Reference Signs List

- 1: cutting-quality maintaining apparatus
- 7: machining tool
- Fc: principal force
- Fcn: thrust force

## Claims

1. A method for maintaining cutting quality, comprising:
a data-acquiring step of acquiring, as a target cutting resistance in advance, the cutting resistance of a tool during cutting performed such that the hardness of a surface layer is lower than a predetermined hardness by adjusting machining conditions; and
a cutting step of performing cutting while detecting the cutting resistance of the tool during cutting and performing control such that the detected cutting resistance is lower than the target cutting resistance.

2. The method for maintaining cutting quality according to Claim 1, wherein a thrust force is used as the cutting resistance.

3. The method for maintaining cutting quality according to Claim 1 or 2, wherein a principal force is used as the cutting resistance.

4. An apparatus for maintaining cutting quality comprising:
a data-acquiring means for acquiring, as a target cutting resistance in advance, the cutting resistance of a tool during cutting performed such that the hardness of a surface layer is lower than a predetermined hardness by adjusting machining conditions;
a detecting means for detecting the cutting resistance of the tool during cutting; and
a control means for performing control such that the cutting resistance detected by the detecting means is lower than the target cutting resistance acquired by the data-acquiring means.

5. The apparatus for maintaining cutting quality according to Claim 4, wherein a thrust force is used as the cutting resistance.

6. The apparatus for maintaining cutting quality according to Claim 4 or 5, wherein a principal force is used as the cutting resistance.
